# EUROPÄISCHE PATENTSCHRIFT

(11) **EP 4 338 579 B1**
(45) Veröffentlichungstag und Bekanntmachung des Hinweises auf die Patenterteilung: **10.09.2025**
(21) Anmeldenummer: 23186590.8
(22) Anmeldetag: 20.07.2023
(51) Int. Cl.: A01F 12/20, A01F 12/40, A01F 12/18, A01F 12/44, A01D 41/12, A01F 7/04, A01F 12/28

(54) **SELBSTFAHRENDER MÄHDRESCHER**
SELF-PROPELLED COMBINE HARVESTER
MOISSONNEUSE-BATTEUSE AUTOMOTRICE

(30) Priorität: 13.09.2022 DE 102022123328
(43) Veröffentlichungstag der Anmeldung: 20.03.2024
(73) Patentinhaber: CLAAS Selbstfahrende Erntemaschinen GmbH, 33428 Harsewinkel (DE)
(72) Erfinder: BUßMANN, Jens, 49179 Ostercappeln (DE)
(74) Vertreter: CLAAS Gruppe

(56) Entgegenhaltungen:
- EP-A1- 1 147 701
- EP-A1- 2 965 614
- EP-A1- 3 335 543
- EP-A1- 3 970 473
- DE-C- 946 098

## Beschreibung

Die vorliegende Anmeldung betrifft einen selbstfahrenden Mähdrescher gemäß dem Oberbegriff von Anspruch 1.

Der Mähdrescher ist dazu vorgesehen und eingerichtet, auf einem Feld aufstehende Pflanzen zu ernten, wobei die Pflanzen unter anderem mittels einer Drescheinrichtung verarbeitet werden. Diese ist als tangentiale Drescheinrichtung ausgebildet und umfasst eine tangentiale Vortrommel sowie eine in Strömungsrichtung eines Erntegutstroms der Vortrommel nachgeschaltete tangentiale Dreschtrommel. Ferner umfasst die Drescheinrichtung einen Dreschkorb, der sowohl die Vortrommel als auch die Dreschtrommel zumindest bereichsweise ummantelnd einfasst. Im Zuge der Verarbeitung des jeweiligen Ernteguts wird letzteres in einem Dreschspalt zwischen der Vortrommel und dem Dreschkorb bzw. zwischen der Dreschtrommel und dem Dreschkorb geführt und derart verarbeitet, dass sich Früchte des Ernteguts von verbleibenden Pflanzenresten des Ernteguts lösen. Ein Großteil der Früchte wird unmittelbar mittels des Dreschkorbs von den Pflanzenresten abgeschieden. Der Dreschkorb ist relativ zu der Dreschtrommel bewegbar, sodass ein zwischen der Dreschtrommel und dem Dreschkorb befindlicher Dreschspalt veränderbar ist. Die Veränderung einer Mächtigkeit des Dreschspalts wird typischerweise je nach herrschenden Randbedingungen wie beispielsweise Feuchte des Ernteguts und Erntegutdurchsatz vorgenommen, um das Dreschergebnis zu optimieren.

Die Dreschtrommel der Drescheinrichtung umfasst einen zylindrischen, um seine Mittelachse drehantreibbaren Trommelkörper sowie eine Vielzahl von Schlagleisten, die an einer äußeren Mantelfläche des Trommelkörpers angeordnet sind. Die Schlagleisten weisen jeweils eine Schlagkante auf, die parallel zu der Mittelachse des Trommelkörpers orientiert ist. Mithin erstrecken sich die Schlagleisten parallel zu der Mittelachse entlang des Trommelkörpers, wobei vorzugsweise sich die Schlagleisten über eine gesamte Länge des Trommelkörpers erstrecken. Die Schlagleisten sind dazu vorgesehen, mit dem Erntegut in Kontakt zu treten und eine Schlagenergie auf das Erntegut auszuüben, sodass die Früchte "ausgedroschen" werden, wodurch die Trennung der Früchte von den Pflanzenresten erfolgt. Damit die Schlagleisten bzw. insbesondere deren Schlagkanten in den beschriebenen Eingriff mit dem Erntegut treten können, stehen die Schlagleisten jeweils in radiale Richtung bezogen auf die Mittelachse des Trommelkörpers in eine von der Mittelachse weg gerichtete Richtung über die äußere Mantelfläche des Trommelkörpers vor. Die radial außenliegenden Schlagkanten der Schlagleisten beschreiben um die Mittelachse einen Umfangskreis, auf dem sie sich im Zuge eines Drehantriebs der Dreschtrommel bewegen. Der Umfangskreis der Schlagkanten weist bezogen auf die Mittelachse einen Schlagradius auf. Vorzugsweise sind die Schlagleisten derart ausgebildet, dass die Umfangskreise aller Schlagkanten sämtlicher Schlagleisten zumindest im Wesentlichen den gleichen Schlagradius aufweisen.

Soweit die Früchte noch nicht im Bereich der Drescheinrichtung abgeschieden werden, wird ein verbleibendes Gemisch aus Pflanzenresten und abgelösten Früchten von der Drescheinrichtung an eine unmittelbar nachgeschaltete, axiale Trenneinrichtung übergeben, mittels der die verbliebenen Früchte von den Pflanzenresten trennbar sind. Die Trenneinrichtung umfasst hierzu zwei axiale Trennrotoren, die jeweils um eine Drehachse drehantreibbar gelagert sind. Typischerweise erstrecken sich die Trennrotoren parallel zueinander und sind in Längsrichtung des Mähdreschers betrachtet nebeneinander angeordnet. Um die Übergabe des Ernteguts von der Drescheinrichtung an die Trenneinrichtung zu erleichtern, kann die Trenneinrichtung an ihrem der Drescheinrichtung zugewandten Ende einen Einlaufkopf umfassen, in den das Erntegut ausgehend von der Drescheinrichtung übergebbar ist. Der Einlaufkopf hat die Funktion, den Erntegutstrom geordnet den Trennrotoren zuzuleiten.

Die Trennrotoren weisen an ihren der Drescheinrichtung zugewandten Enden in der Regel jeweils mindestens einen Einlaufflügel auf, der sich bezogen auf die Drehachse des jeweiligen Trennrotors radial erstreckt und dazu vorgesehen und eingerichtet ist, in einen jeweiligen Einlaufbereich des Einlaufkopfs, der dem jeweiligen Trennrotor zugeordnet ist, übergebenes Erntegut zu erfassen und in eine Rotationsbewegung um die Drehachse des Trennrotors zu versetzen. Im Zuge des Betriebs der Trennrotoren wird das Erntegut mittels eines jeweiligen Trennrotors spiralförmig entlang dessen Drehachse bis zu einem hinteren Ende der Trenneinrichtung transportiert. Durch die mechanische Einwirkung des Trennrotors auf das Gemisch findet hierbei die gewünschte Trennung der Früchte von den Pflanzenresten statt. Die Früchte werden durch ein Dreschkorb der Trenneinrichtung nach unten auf eine Siebeinrichtung abgeschieden.

Nach der Trennung des Gemischs in Pflanzenreste und Früchte werden die Pflanzenreste schließlich an einem hinteren Ende des Mähdreschers ausgeworfen, während die Früchte in einem Korntank gesammelt werden.

Ein Mähdrescher der eingangs beschriebenen Art ist im Stand der Technik bereits bekannt. Hierzu wird auf die Offenlegungsschrift DE 42 32 450 A1 hingewiesen, die einen selbstfahrenden Mähdrescher mit einer axialen Trenneinrichtung beschreibt. Das Dokument beschäftigt sich damit, eine Drehmomentbelastung des mindestens einen Trennrotors der Trenneinrichtung zu vergleichmäßigen. Ein weiterer gattungsgemäßer Mähdrescher wird in der EP 3 335 543 A1 gezeigt.

In der Praxis hat sich insbesondere die Übergabe des Ernteguts von der Drescheinrichtung an die Trenneinrichtung als kritisch für einen effizienten Betrieb des Mähdreschers herausgestellt. Dies liegt unter anderem darin begründet, dass der Erntegutstrom im Zuge der Übergabe von der Trenneinrichtung aufgenommen und auf die beiden Trennrotoren aufgeteilt werden muss. Hierbei kann es zu Störungen kommen, beispielsweise in Form von Verstopfungen oder sonstigen Einflüssen, die einen negativen Einfluss auf die Verarbeitung des Ernteguts haben.

Der vorliegenden Anmeldung liegt mithin die Aufgabe zugrunde, einen Mähdrescher bereitzustellen, bei dem die Übergabe des Ernteguts von der Drescheinrichtung an die Trenneinrichtung optimiert ist.

Die zugrunde liegende Aufgabe wird erfindungsgemäß mittels eines selbstfahrenden Mähdreschers mit den Merkmalen des Anspruchs 1 gelöst. Vorteilhafte Ausgestaltungen ergeben sich aus den zugehörigen Unteransprüchen.

Der erfindungsgemäße Mähdrescher ist dadurch gekennzeichnet, dass der Dreschkorb unmittelbar dem Einlaufkopf vorgeordnet und relativ zu diesem bewegbar ist, wobei der Einlaufkopf an einem der Drescheinrichtung zugewandten Ende einen mittigen Gutstromteiler aufweist, der in Form einer vertikal orientierten Trennwand ausgebildet und dazu geeignet ist, von der Drescheinrichtung an den Einlaufkopf übergebenes Erntegut auf die beiden Trennrotoren aufzuteilen. Bevorzugt wird das Erntegut unmittelbar von der Dreschtrommel an die Trenneinrichtung übergeben, wobei die Dreschtrommel unmittelbar der Trenneinrichtung vorgeschaltet ist. Hierdurch wird das Erntegut besonders gering beansprucht und infolgedessen der Kornbruch vermindert. Der Dreschkorb umfasst eine Gutleithilfe, die dem Gutstromteiler zugeordnet ist und diesen zumindest bereichsweise umgreift. Dieses Umgreifen kann insbesondere in Form einer dreiseitigen Einfassung nach Art eines U-Profils erfolgen, das den Gutstromteiler zumindest bereichsweise umgreift. Da die Gutleithilfe als Teil des Dreschkorbs ausgebildet ist, ist sie gemeinsam mit dem restlichen Dreschkorb relativ zu dem Einlaufkopf bewegbar, wobei die Gutleithilfe im Zuge einer Bewegung des Dreschkorbs relativ zu dem Einlaufkopf entlang des Gutstromteilers führbar ist.

Der Gutstromteiler ist besonders hilfreich, um den Erntegutstrom auf separate Einlaufbereiche des Einlaufkopfs aufzuteilen, wobei jedem der Trennrotoren jeweils ein Einlaufbereich des Einlaufkopfs zugeordnet ist. Mittels des Gutstromteilers wird folglich eine scharfe Abgrenzung zwischen den Einlaufbereichen bewirkt, sodass der Erntegutstrom - möglichst zu gleichen Teilen - auf die beiden Trennrotoren aufgeteilt wird. Zur Unterstützung dieser Aufteilung ist die Gutleithilfe vorgesehen. Dies ist dem Umstand geschuldet, dass Pflanzenmaterial in unbeabsichtigter Weise an dem Gutstromteiler "hängenbleiben" kann, wobei es sich an diesem Verhaken kann, indem es dazu neigt, den Gutstromteiler zu "umschlingen". Dies kann insbesondere dadurch geschehen, dass längliche Pflanzenreste, beispielsweise in Form von Halmen, frontal gegen den Gutstromteiler strömen, an diesem umknicken und ihn umschlingen, sodass ein Teil des jeweiligen Halms an einer Seite des Gutstromteilers und ein anderer Teil an der gegenüberliegenden Seite des Gutstromteilers anliegen. Der Pflanzenrest bewegt sich daraufhin nicht weiter und behindert den Fluss des übrigen Erntegutstroms. Folglich umgreift das jeweilige Pflanzenmaterial den Gutstromteiler zumindest lokal sowie zumindest für einen gewissen Zeitraum und kann hierdurch den Fluss des übrigen Ernteguts stören. Insbesondere kann eine solche Situation dazu beitragen, dass weiteres Pflanzenmaterial sich an dem Gutstromteiler ansammelt und eine umso größere Behinderung des Erntegutstroms erzeugt.

Die Erfindung hat den besonderen Vorteil, dass die Gutleithilfe ein solches Szenario in seiner Häufigkeit bzw. Wahrscheinlichkeit zu mindern hilft, indem die Aufteilung des Erntegutstroms auf die beiden Einlaufbereiche optimiert wird. Der besondere Vorteil der Erfindung liegt darin, dass die Gutleithilfe als Teil des Dreschkorbs gemeinsam mit Letzterem relativ zu dem Einlaufkopf bewegt wird, wodurch der Erntegutstrom im Zuge seiner Übergabe von der Drescheinrichtung an die Trenneinrichtung in jedem Fall zumindest in einem Mittelbereich der Drescheinrichtung in wesentlichen Teilen über die Gutleithilfe geführt und folglich in seiner Strömung von der Gutleithilfe unterstützt wird. Dem liegt die Überlegung zugrunde, dass der Erntegutstrom in wesentlichen Teilen unmittelbar von dem sich zwischen einer jeweiligen Trommel der Drescheinrichtung, beispielsweise der Dreschtrommel, und dem Dreschkorb erstreckenden Dreschspalt in den Einlaufkopf überführt wird. Mithin findet die Strömung des Ernteguts größtenteils in einem Höhenbereich des Dreschspalts statt. Wäre die Gutleithilfe bezogen auf den Einlaufkopf fest installiert, könnte sie einer Bewegung des Dreschkorbs relativ zu dem Einlaufkopf nicht folgen und je nach Stellung des Dreschkorbs lediglich eine verminderte, schlimmstenfalls gar keine unterstützende Wirkung auf die Aufteilung des Erntegutstroms ausüben, da der Erntegutstrom je nach Stellung des Dreschkorbs oberhalb oder unterhalb der Gutleithilfe in die Trenneinrichtung eingeleitet würde. Die Ausbildung der Gutleithilfe als Teil des Dreschkorbs und die damit verbundene Fixierung der Gutleithilfe relativ zu dem übrigen Dreschkorb führt hingegen dazu, dass die Gutleithilfe in jedem Fall ihre volle Wirksamkeit entfalten kann und der Erntegutstrom, der aus dem Dreschspalt kommend an die Trenneinrichtung übergeben wird, mit der Gutleithilfe eingreifen kann. Es hat sich in Versuchen gezeigt, dass hierdurch der Fluss des Ernteguts im Bereich des Gutstromteilers vergleichmäßigt wird und das Risiko von Verstopfungen deutlich reduziert ist.

In einer vorteilhaften Ausgestaltung des erfindungsgemäßen Mähdreschers ist die Gutleithilfe in eine von dem Gutstromteiler weg gerichtete Richtung betrachtet spitz zu einer Kante hin zulaufend ausgebildet. Auf diese Weise kann die Gutleithilfe besonders einfach in Form eines Keils ausgebildet werden, dessen Spitze gegen den Erntegutstrom gerichtet ist. Der Erntegutstrom trifft mithin im Zuge eines Betriebs des Mähdreschers frontal auf die spitz zulaufende Kante des Gutstromteilers, der sich vorzugsweise im Anschluss an die Kante in Strömungsrichtung des Erntegutstroms betrachtet keilförmig aufweitet. Hierdurch ist die Teilungsunterstützung, die die Gutleithilfe bewirkt, für die Aufteilung des Erntegutstroms auf den linken und den rechten Einlaufbereich des Einlaufkopfs optimiert.

Weiterhin kann eine solche Ausgestaltung besonders von Vorteil sein, bei der die Gutleithilfe an einer von dem übrigen Dreschkorb abgewandten Seite eine Nut umfasst, in der der Gutstromteiler geführt ist. Diese Ausgestaltung hat den Vorteil, dass die Gutleithilfe den Gutstromteiler zumindest lokal besonders einfach umgreifen kann, wobei bevorzugt die Gutleithilfe den Gutstromteiler dreiseitig einfasst. Die Gutleithilfe verhindert auf diese Weise, dass jeweiliges Erntegut "ungeführt" auf den Gutstromteiler trifft und in der vorstehend beschriebenen Weise droht, an diesem hängenzubleiben. Die Führung des Gutstromteilers in der Nut der Gutleithilfe ermöglicht eine Relativbewegung der Gutleithilfe relativ zu dem Gutstromteiler, sodass der Dreschkorb ohne Weiteres relativ zu dem Gutstromteiler bzw. dem Einlaufkopf bewegt werden kann. Im Zuge einer solchen Bewegung bleibt der Gutstromteiler in der Nut der Gutleithilfe geführt, die entsprechend fortwährend den Gutstromteiler umgreift und die Führung des Ernteguts bei der Übergabe an die Trenneinrichtung unterstützt.

In einer weiteren besonders bevorzugten Ausgestaltung weist der Dreschkorb am Übergang zu dem Einlaufkopf eine Abschlussleiste auf, die sich bevorzugt parallel zu einer Mittelachse eines Trommelkörpers der Dreschtrommel erstreckt. Insbesondere kann der Dreschkorb im Bereich der Abschlussleiste unmittelbar dem Einlaufkopf vorgeordnet sein. Bevorzugt ist die Gutleithilfe in die Abschlussleiste eingesetzt, sodass die Gutleithilfe einen dem Einlaufkopf zugewandten Abschluss des Dreschkorbs bildet. Auf diese Weise wird bewirkt, dass der Erntegutstrom unmittelbar beim Übertritt von einem Wirkungsbereich des Dreschkorbs in einen Wirkungsbereich des Einlaufkopfs mit der Gutleithilfe zusammenwirkt und entsprechend mit ihrer Hilfe auf die beiden Einlaufbereiche des Einlaufkopfs aufgeteilt wird.

Den erfindungsgemäßen Mähdrescher weiter ausgestaltend weist der Gutstromteiler zumindest in einem Verstellbereich, in dem die Gutleithilfe im Zuge einer Verstellung des Dreschkorbs entlang des Gutstromteiler führbar ist, eine zumindest im Wesentlichen konstante Dicke auf. Diese Ausgestaltung hat den besonderen Vorteil, dass zumindest innerhalb des genannten Verstellbereichs die Gutleithilfe besonders einfach entlang des Gutstromteilers führbar ist, wobei bevorzugt die Gutleithilfe eine vorstehend beschriebene Nut aufweist, in der der Gutstromteiler geführt ist.

In einer weiterhin vorteilhaften Ausgestaltung des erfindungsgemäßen Mähdreschers ist zumindest ein Korbsegment des Dreschkorbs bündig einem der Drescheinrichtung zugewandten Ende des Einlaufkopfs vorgeordnet. Dies hat den Vorteil, dass der Erntegutstrom im Zuge seiner Übergabe ohne Störeinflüsse in den Einlaufkopf eintreten kann, wobei insbesondere vorstehende Kanten oder sonstige Vorsprünge, die einen Fluss des Ernteguts behindern könnten, aufgrund des bündigen Übergangs von dem Korbsegment in bzw. zu dem Einlaufkopf verhindert sind.

Vorzugsweise ist der Mähdrescher im Übrigen derart ausgebildet, dass die Dreschtrommel einen zylindrischen, um eine Mittelachse drehantreibbaren Trommelkörper umfasst. Die Dreschtrommel umfasst ferner einen in Längsrichtung des Trommelkörpers betrachtet mittig an einer äußeren Mantelfläche des Trommelkörpers angeordneten Schneidring, der in Umfangsrichtung des Trommelkörpers umläuft. Der Schneidring weist mindestens eine radial äußere, in Umfangsrichtung des Trommelkörpers umlaufende Schneidkante auf, die in einer senkrecht zu der Mittelachse des Trommelkörpers angeordneten Schneidebene angeordnet ist. Die Schneidkante beschreibt hierbei einen Umfangskreis, entlang dessen die Schneidkante im Zuge eines Drehantriebs des Trommelkörpers geführt ist.

Der Schneidring kann mit seiner Schneidkante insbesondere derart ausgebildet sein, dass er dazu geeignet ist, Pflanzenmaterial, das insbesondere von Pflanzenresten gebildet sein kann, zu zerschneiden. Insbesondere ist der Schneidring dazu geeignet, den Erntegutstrom mittig bezogen auf ihre Mittelachse in einen linken Teil und einen rechten Teil zu trennen, indem Pflanzenmaterial, das sich in einem Mittelbereich der Dreschtrommel befindet und im Zuge der Übergabe an den Einlaufkopf zu einem der beiden Einlaufbereiche geleitet werden muss, durchtrennt bzw. durchgeschnitten wird, wodurch die Teile des Pflanzenmaterials, die dem in Längsrichtung der Mittelachse betrachtet linken Teil des Trommelkörpers zugeordnet sind, ohne Weiteres dem linken Einlaufbereich des Einlaufkopfs und umgekehrt die Teil des Pflanzenmaterials, die dem rechten Teil des Trommelkörpers zugeordnet sind, ohne Weiteres dem rechten Einlaufbereich des Einlaufkopfs zugeleitet werden können. Hierdurch ist insbesondere vermieden, dass Pflanzenmaterial an dem Gutstromteiler des Einlaufkopfs in der oben beschriebenen Weise hängenbleibt und den Fluss des Erntegutstroms hierdurch behindert und stört. Die Kombination eines solchen Schneidrings mit der erfindungsgemäßen Ausgestaltung unter Verwendung der beschriebenen Gutleithilfe hat den Vorteil, dass das Pflanzenmaterial, das auf die Gutleithilfe trifft, zumindest größtenteils ohne Weiteres auf den linken und den rechten Einlaufbereich des Einlaufkopfs aufgeteilt werden kann. Pflanzenmaterial, das frontal auf die Gutleithilfe stößt und sich weder zu der einen noch zu der anderen Seite umlenken lässt, sondern die Gutleithilfe "umschlingt" bzw. sich an dieser verhakt, ist hierdurch zumindest im Wesentlichen vermieden.

Sofern die Dreschtrommel einen beschriebenen Schneidring umfasst, kann es weiterhin besonders vorteilhaft sein, wenn die Dreschtrommel eine Vielzahl von Schlagleisten umfasst, die an der äußeren Mantelfläche des Trommelkörpers angeordnet sind. Die Schlagleisten weisen jeweils eine langgestreckte Schlagkante auf, die sich parallel zu der Mittelachse des Trommelkörpers erstreckt, wobei Schlagleisten jeweils in radiale Richtung bezogen auf die Mittelachse in eine von der Mittelachse weg gerichtete Richtung über die äußere Mantelfläche des Trommelkörpers vorstehen. Hierbei beschreiben die Schlagkanten jeweils einen Umfangskreis um die Mittelachse, auf dem die jeweilige Schlagkante bei bestimmungsgemäßem Betrieb der Dreschtrommel in einem Schlagradius um die Mittelachse umläuft. Bevorzugt sind die Schlagradien aller Schlagkanten der Schlagleisten identisch, sodass die Schlagkanten jeweils auf gleichen Umfangskreisen um die Mittelachse umlaufen.

In einer weiterhin vorteilhaften Ausgestaltung ist ein Schneidradius des Umfangskreises der Schneidkante, den der Umfangskreis der Schneidkante bezogen auf die Mittelachse des Trommelkörpers aufweist, größer als die Schlagradien der Schlagkanten der Schlagleisten. Anders ausgedrückt steht die Schneidkante des Schneidrings bei dieser Ausgestaltung radial bezogen auf den Trommelkörper gegenüber den Schlagkanten der Schlagleisten vor. Der Schneidradius kann gegenüber den Schlagradien lediglich minimal größer ausfallen, wobei vorzugsweise der Schneidradius die Schlagradien der Schlagkanten vorzugsweise im Bereich zwischen 0 mm und 5 mm, vorzugsweise zwischen 1 mm und 3 mm, übersteigt. Die Ausgestaltung in der Art, dass der Schneidradius größer ist als die Schlagradien, führt dazu, dass der schneidende Eingriff des Schneidrings mit dem Erntegut zuverlässig eintritt und das Erntegut nicht durch die Wirkung der Schlagleisten von einem Eingriff mit dem Schneidring abgehalten wird.

Die Erfindung ist nachstehend anhand eines Ausführungsbeispiels, das in den Figuren dargestellt ist, näher erläutert. Es zeigt:
- Fig. 1:: Einen Querschnitt durch einen Mähdrescher gemäß dem Stand der Technik,
- Fig. 2:: Ein Querschnitt durch einen Arbeitsstrang eines Mähdreschers gemäß dem Stand der Technik,
- Fig. 3:: Ein Detail einer Drescheinrichtung des Arbeitsstrangs gemäß Figur 2,
- Fig. 4:: Eine perspektivische Ansicht eines Einlaufkopfs in einem Übergangsbereich von einer Drescheinrichtung zu einer Trenneinrichtung,
- Fig. 5:: Ein Detail einer Gutleithilfe in dem Übergangsbereich gemäß Figur 4,
- Fig. 6:: Ein weiteres Detail der Gutleithilfe gemäß Figur 5,
- Fig. 7:: Ein Querschnitt in dem Übergangsbereich gemäß Figur 4, wobei sich ein Dreschkorb in einer ersten Stellung befindet,
- Fig. 8:: Der Querschnitt gemäß Figur 7, wobei sich der Dreschkorb in einer zweiten Stellung befindet,
- Fig. 9:: Ein Querschnitt in dem Übergangsbereich, wobei die Dreschtrommel mit einem Schneidring ausgestattet ist.

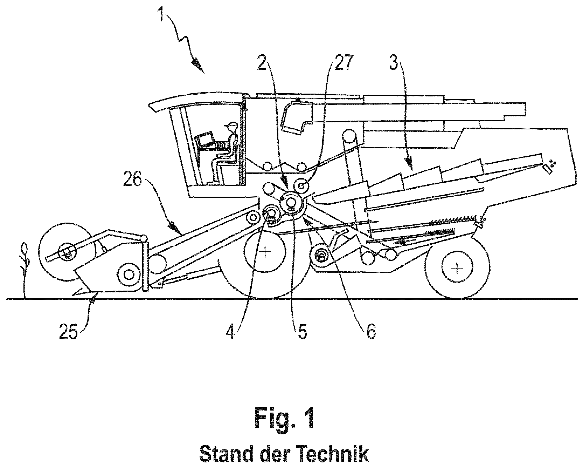

Ein nach dem Stand der Technik bekannter Mähdrescher **1** ist beispielhaft anhand von **Figur 1** veranschaulicht. Dieser umfasst ein Schneidwerk **25,** mittels dessen Pflanzen abschneidbar sind, die sodann mittels eines Schrägförderers **26** einer tangentiale Drescheinrichtung **2** zuführbar sind. Die Drescheinrichtung **2** umfasst eine Vortrommel **4,** eine Dreschtrommel **5** sowie eine Wendetrommel **27,** wobei Mittelachsen der Trommeln quer zu einer Längsrichtung des Mähdreschers 1 ausgerichtet sind. Ferner umfasst die Drescheinrichtung **2** einen Dreschkorb **6,** der zumindest die Vortrommel **4** und die Dreschtrommel **5** bereichsweise einfasst. Die Verarbeitung des Ernteguts mittels der Drescheinrichtung **2** führt dazu, dass Früchte von den Pflanzen abgelöst und die Pflanzen auf diese Weise in die Früchte und verbleibende Pflanzenreste getrennt werden. Ein Großteil der Früchte kann unmittelbar im Bereich der Drescheinrichtung **2** mittels des Dreschkorbs **6** nach unten auf einen Vorlaufboden abgeführt werden. Im Übrigen wird ein Gemisch aus Pflanzenresten und abgelösten Früchten mittels der Wendetrommel **27** an eine nachgeschaltete Trenneinrichtung **3** übergeben. Diese ist in dem in **Figur 1** gezeigten Beispiel von einem Hordenschüttler gebildet. Die Trenneinrichtung **3** hat die Aufgabe, die verbliebenen Früchte von den Pflanzenresten zu trennen, sodass diese separiert gewonnen werden können. Die Pflanzenreste werden schließlich an einem hinteren Ende des Mähdreschers **1** aus selbigem ausgeworfen. Die Früchte werden hingegen in einem Korntank gesammelt und bis zur weiteren Abfuhr gelagert.

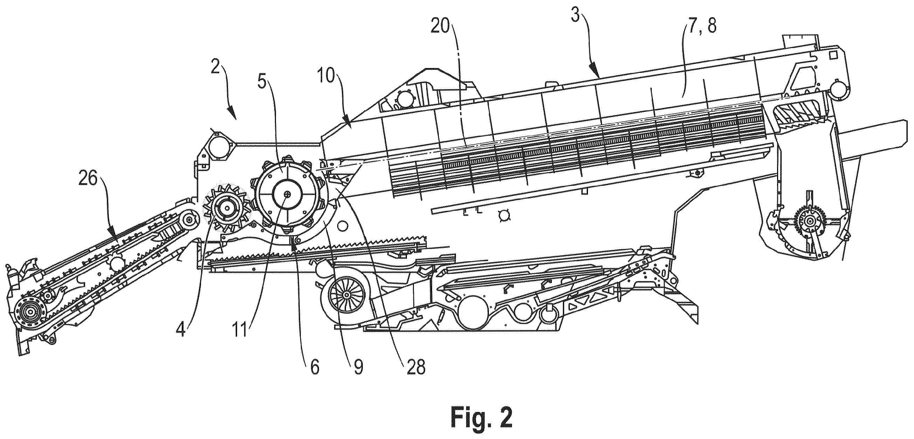

Alternativ zu einer als Hordenschüttler ausgebildeten Trenneinrichtung **3** ist ebenfalls eine axiale Trenneinrichtung **3** bekannt, die über mindestens einen Trennrotor **7, 8** verfügt. Anhand des in **Figur 2** gezeigten Beispiels aus dem Stand der Technik ergibt sich eine axiale Trenneinrichtung **3,** die über zwei Trennrotoren **7, 8** verfügt, die parallel zueinander sowie in Längsrichtung des Mähdreschers **1** betrachtet nebeneinander angeordnet sind. Die Trennrotoren **7, 8** sind jeweils um eine Drehachse **20** drehantreibbar gelagert. Die Trenneinrichtung **3** umfasst in diesem Beispiel einen der Drescheinrichtung **2** zugewandten Einlaufkopf **10,** in den das Erntegut ausgehende von der Drescheinrichtung **2** übergeben wird. Hierzu umfasst der Einlaufkopf **10** zwei Einlaufbereiche **29,** von denen jeweils einer einem der Trennrotoren **7, 8** zugeordnet ist. Die Einlaufbereiche **29** sind mittels eines Gutstromteilers **28** baulich voneinander getrennt, sodass Erntegut, das von der Drescheinrichtung **2** an die Trenneinrichtung **3** übergeben wird, mittels des Gutstromteilers **28** auf die beiden Einlaufbereiche **29** aufgeteilt wird. Der Gutstromteiler **28** ist hier von einer vertikalen Trennwand gebildet, die die beiden Einlaufbereiche **29** voneinander trennt. Eine Besonderheit der in **Figur 2** dargestellten Ausführungsform besteht darin, dass die Drescheinrichtung **2** ohne eine in **Figur 1** dargestellt Wendetrommel **27** oder eine sonstige Zuführtrommel ausgebildet ist, sodass das Erntegut unmittelbar von der Dreschtrommel **5** an die Trenneinrichtung **3** übergeben wird.

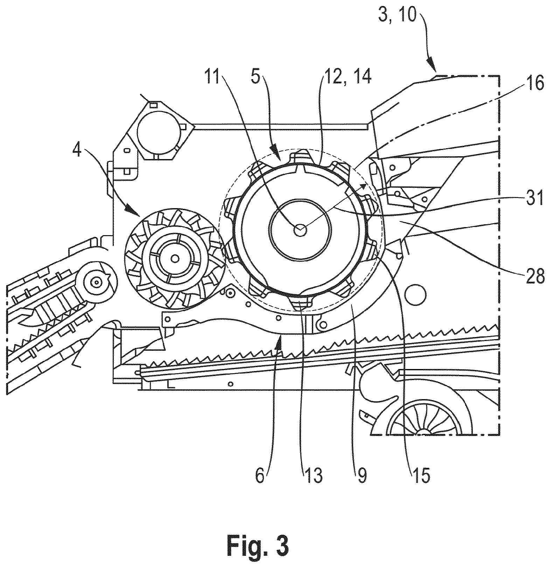

Die Dreschtrommel **5** erstreckt sich längs entlang einer Mittelachse **11** eines Trommelkörpers **12** und umfasst eine Mehrzahl von Schlagleisten **13.** Dies ergibt sich besonders gut anhand von **Figur 3****.** Die Schlagleisten **13** sind an einer äußeren Mantelfläche **14** des Trommelkörpers **12** der Dreschtrommel **5** angeordnet, wobei die Schlagleisten **13** bezogen auf die Mittelachse **11** des Trommelkörpers **12** radial über die Mantelfläche **14** hinaus vorstehen. Die Schlagleisten **13** umfassen jeweils eine Schlagkante **15,** die einen radial äußeren Abschluss einer jeweiligen Schlagleiste **13** bildet. Infolge eines Drehantriebs der Dreschtrommel **5** um die Mittelachse **11** im Zuge eines Betriebs des jeweiligen Mähdreschers **1** kommen die Schlagleisten **13** mit ihren Schlagkanten **15** in schlagenden Kontakt mit dem Erntegut, wodurch die Ablösung der Früchte von den Pflanzenresten bewirkt wird. Die Schlagkanten **15,** die sich parallel zu der Mittelachse **11** erstrecken, bewegen sich im Zuge eines Drehantriebs des Trommelkörpers **12** auf einem Umfangskreis **16,** der in **Figur 3** anhand einer gestrichelten Linie veranschaulicht ist. Der Umfangskreis **16** erstreckt sich bezogen auf die Mittelachse **11** in einem Schlagradius **31** um die Mittelachse **11.** Um einen Fluss des Ernteguts von der Drescheinrichtung **2** zu der Trenneinrichtung **3** zu begünstigen, ist der Dreschkorb **6** bündig einem der Drescheinrichtung **2** zugewandten Ende des Einlaufkopfs **10** vorgeordnet. In dem gezeigten Beispiel umfasst der Dreschkorb **6** ein hinteres Korbsegment **9,** das unmittelbar sowie bündig dem Einlaufkopf **10** vorgeordnet ist.

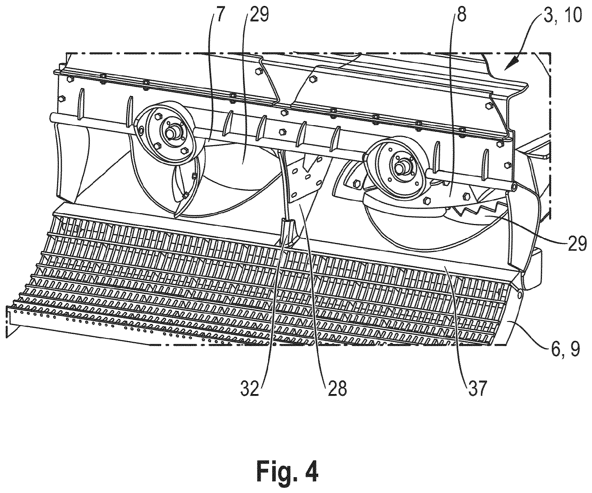

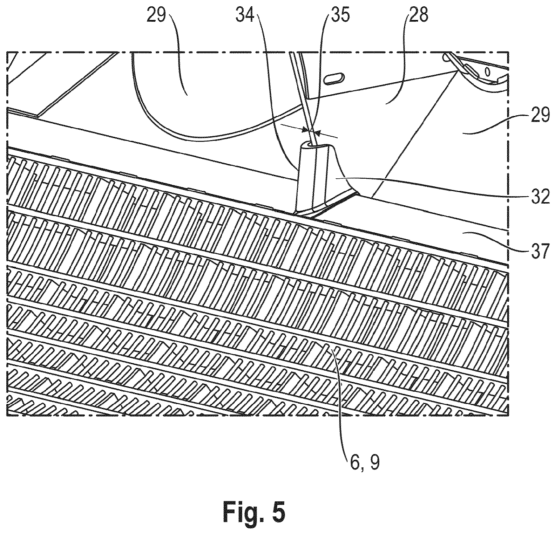

Um die Aufteilung des Erntegutstroms auf die beiden Einlaufbereiche **29** des Einlaufkopfs **10** zu optimieren, ist der Dreschkorb **6** mit einer Gutleithilfe **32** ausgestattet. Diese ergibt sich besonders gut anhand der **Figuren 4 bis 9**. Die Gutleithilfe **32** ist dem hinteren Korbsegment **9** des Dreschkorb **6** zugeordnet, wobei die Gutleithilfe **32** bezogen auf den Einlaufkopf **10** dem Gutstromteiler **28** zugeordnet ist. Hierbei ist die Gutleithilfe **32** derart ausgebildet, dass sie den Gutstromteiler **28,** der von einer vertikalen Trennwand zwischen den beiden Einlaufbereichen **29** gebildet ist, lokal umgreift. Hierzu umfasst die Gutleithilfe **32** eine rückwärtige Nut **33,** in der der Gutstromteiler **28** geführt ist. Im Zuge einer Bewegung des Dreschkorbs **6** bzw. zumindest des Korbsegments **9** relativ zu der Dreschtrommel **5** wird entsprechend die Gutleithilfe **32** bewegt, da diese fest mit dem übrigen Dreschkorb **6** verbunden und ein Teil des Dreschkorbs **6** ist. Hierbei wird die Gutleithilfe **32** derart mittels ihrer Nut **33** entlang des Gutstromteilers **28** geführt, dass der Gutstromteiler **28** fortwährend in der Nut **33** angeordnet ist. Dies hat den Vorteil, dass die teilende Wirkung der Gutleithilfe **32** unabhängig von einer Stellung des Dreschkorbs **6** relativ zu der Dreschtrommel **5** vorhanden ist, wodurch wiederum die Aufteilung des Erntegutstroms auf die Einlaufbereiche **29** des Einlaufkopfs **10** verbessert wird. Zu diesem Zweck ist die Gutleithilfe **32** an ihrem der Dreschtrommel **5** zugewandten Ende keilförmig ausgebildet, wobei die Gutleithilfe **32** in Richtung der Drescheinrichtung **2** zu einer spitzen Kante **34** hin zu läuft. Dies ergibt sich besonders gut anhand von **Figur 5**.

In bevorzugter Weise ist der Gutstromteiler **28** zumindest in einem Verstellbereich **38** mit einer konstanten Dicke **35** ausgebildet, wodurch die Gutleithilfe **32** zumindest innerhalb des Verstellbereichs **38** besonders einfach entlang des Gutstromteilers **28** bewegbar ist. Insbesondere kommt es nicht zu einer Verkantung oder Verklemmung des Gutstromteilers **28** in der Nut **33** der Gutleithilfe **32.**

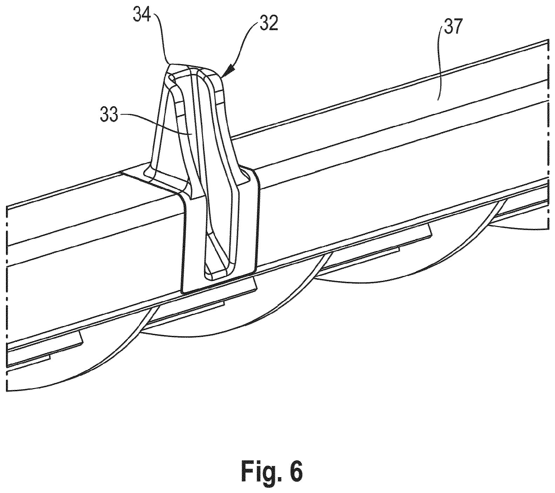

Weiterhin ist der Dreschkorb **6** derart ausgebildet, dass er als Abschluss in Richtung des Einlaufkopfs **10** eine Abschlussleiste **37** umfasst. Im Bereich der Abschlussleiste **37** findet die Übergabe des Erntegutstroms von der Drescheinrichtung **2** an die Trenneinrichtung **3** statt. Die Gutleithilfe **32** ist in die Abschlussleiste **37** eingesetzt, sodass die Abschlussleiste **37** im Bereich der Gutleithilfe **32** ausgewechselt ist. Dies ergibt sich besonders gut anhand von **Figur 6**. Die Gutleithilfe **32** befindet sich mithin an einem der Trenneinrichtung **3** zugewandten Ende des Dreschkorb **6,** sodass der Erntegutstrom, der ausgehend von der Drescheinrichtung **2** an die Trenneinrichtung **3** übergeben wird, unmittelbar beim Übergang an die Trenneinrichtung **3** bzw. deren Einlaufkopf **10** zumindest im Mittelbereich der Dreschtrommel **5** über die Gutleithilfe **32** geführt wird, sodass diese in der beschriebenen Weise die Aufteilung des Erntegutstroms auf den linken und den rechten Einlaufbereichs **29** des Einlaufkopfs **10** vornehmen kann.

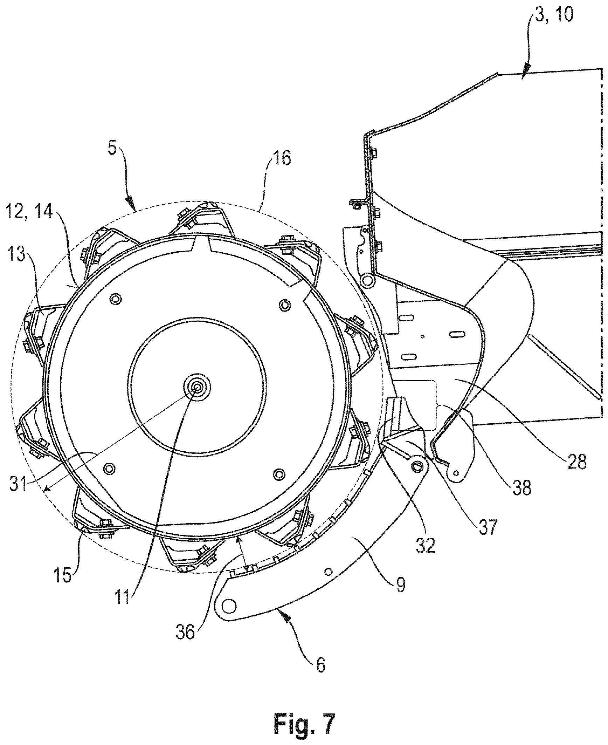

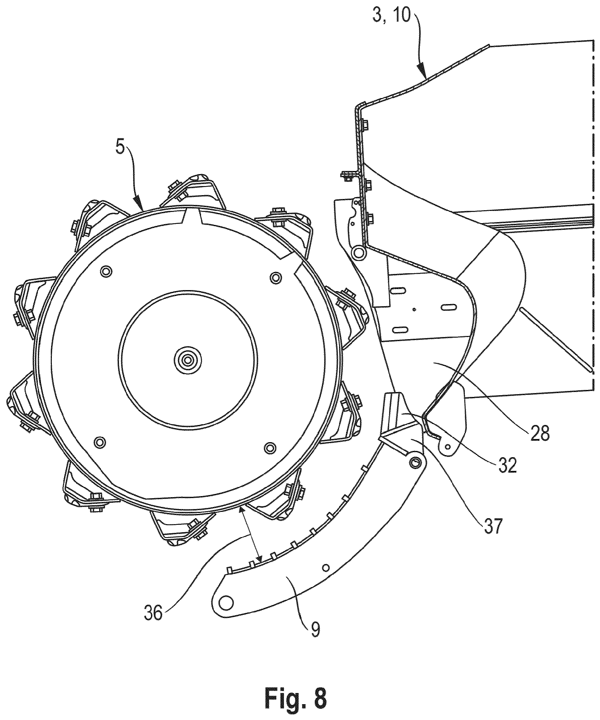

Diese Führung des Erntegutstroms über die Gutleithilfe **32** und mithin die Sicherstellung, dass die Gutleithilfe **32** in der gewünschten Weise wirken kann, ist durch die Ausgestaltung der Gutleithilfe **32** als Teil des Dreschkorbs **6** unabhängig von einer Stellung des Dreschkorbs **6** sichergestellt. Dies ist besonders gut anhand einer Gegenüberstellung der **Figuren 7** **und** **8** erkennbar, die verschiedene Stellungen des Dreschkorbs **6** bzw. des hinteren Korbsegments **9** des Dreschkorbs **6** zeigen. Der Dreschkorb **6** ist nämlich relativ zu der Dreschtrommel **5** bewegbar, sodass eine Mächtigkeit eines Dreschspalts **36,** der sich zwischen der Dreschtrommel **5** und dem Dreschkorb **6** erstreckt, veränderbar ist. Diese Veränderung kann in Abhängigkeit äußerer Ernteparameter sinnvoll sein, um das Dreschergebnis positiv zu beeinflussen. Wie sich anhand der **Figuren 7** **und** **8** ergibt, befindet sich die Gutleithilfe **32** relativ zu dem hinteren Korbsegment **9** in einer unveränderten Position, sodass die Gutleithilfe **32** ungeachtet der Stellung des Dreschkorbs **6** insgesamt ihre Wirkung entfalten kann.

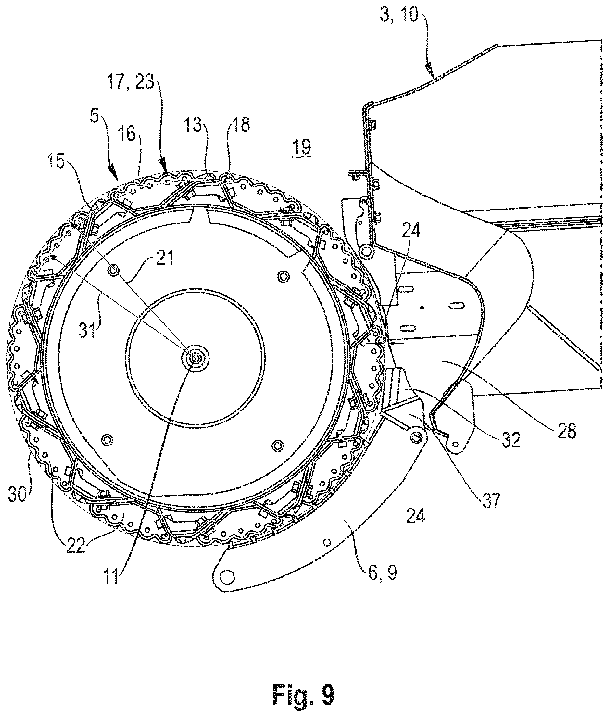

In besonders bevorzugter Weise ist in dem gezeigten Beispiel die Dreschtrommel **5** mit einem Schneidring **17** ausgestattet, der bezogen auf die Mittelachse **11** des Trommelkörpers **12** mittig an dem Trommelkörper **12** angeordnet ist und sich in einer senkrecht zu der Mittelachse **11** orientierten Ebene erstreckt. Dies ergibt sich besonders gut anhand von **Figur 9**. Der Schneidring **17** umfasst in dem gezeigten Beispiel zwei Schneidscheiben **23,** die unmittelbar nebeneinander paarweise angeordnet sind. Die Schneidscheiben **23** sind zumindest im Wesentlichen baugleich und weisen jeweils eine Schneidkante **18** auf. Hierbei ist der Schneidring **17** derart ausgebildet, dass die Schneidkanten **18** der Schneidscheiben **23** bezogen auf die Mittelachse **11** in einem Umfangskreis **30** um die Mittelachse **11** umlaufend ausgebildet sind. Ein Schneidradius **21** des Umfangskreises **30** ist hierbei größer als der Schlagradius **31** der Schlagkanten **15.** Mit anderen Worten stehen die Schneidkanten **18** bezogen auf die Mittelachse **11** radial weiter über die äußere Mantelfläche **14** des Trommelkörpers **12** vor als die Schlagleisten **15.**

In dem gezeigten Beispiel ist der Schneidring **17** segmentiert ausgebildet, das heißt von einer Vielzahl einzelner Ringsegmente **22** gebildet. Diese Ringsegmente **22** sind jeweils zwischen zwei benachbarten Schlagleisten **13** angeordnet. Diese Ausgestaltung führt dazu, dass die Schneidkanten **18** nicht in sich geschlossen, sondern mehrfach, nämlich der Anzahl der Schlagleisten **13** entsprechend häufig, unterbrochen sind. Diese Ausgestaltung hat den Vorteil, dass die Schlagleisten **13** bzw. deren Schlagkanten **15** nicht unterbrochen werden müssen. Zudem ist die Ausgestaltung des Schneidrings **17** in Form einer Vielzahl von Ringsegmente **22** besonders vorteilhaft, um eine bestehende Dreschtrommel **5** nachzurüsten und auf diese Weise mit einem Schneidring **17** auszustatten.

Bezogen auf die Trenneinrichtung **3** bzw. deren Einlaufkopf **10** ist der Schneidring **17** derart angeordnet, dass er unmittelbar an den Einlaufkopf **10** angrenzend angeordnet ist. In besonders vorteilhafter Weise ist in dem gezeigten Beispiel der Schneidring **17** zudem dem Gutstromteiler **28** zugeordnet, sodass eine schneidende Wirkung der Schneidkanten **18** auf das Erntegut dort eintritt, wo sie zwecks Verteilung des Ernteguts auf die beiden Einlaufbereiche **29** des Einlaufkopfs **10** benötigt wird. Insbesondere wird das Pflanzenmaterial des Erntegutstroms derart zerschnitten, dass es sauber mittels der Gutleithilfe **32** und des Gutstromteilers **28** auf den linken und den rechten Einlaufbereich **29** aufgeteilt werden kann. In besonders bevorzugter Weise beträgt in dem gezeigten Beispiel ein Abstand **24** des Umfangskreises **30** der Schneidkanten **18** zu dem Gutstromteiler **28** lediglich ca. 2 mm.

Zur Erzielung einer besseren Schneidwirkung sind die Schneidkanten **18** in dem gezeigten Beispiel sägezahnförmig ausgebildet. Die Schneidkanten **18** erstrecken sich hierbei jeweils in einer senkrecht zu der Mittelachse **11** des Trommelkörpers **12** orientierten Schneidebene **19.**

### Bezugszeichenliste

- 1: Mähdrescher
- 2: Drescheinrichtung
- 3: Trenneinrichtung
- 4: Vortrommel
- 5: Dreschtrommel
- 6: Dreschkorb
- 7: Trennrotor
- 8: Trennrotor
- 9: Korbsegment
- 10: Einlaufkopf
- 11: Mittelachse
- 12: Trommelkörper
- 13: Schlagleiste
- 14: Mantelfläche
- 15: Schlagkante
- 16: Umfangskreis
- 17: Schneidring
- 18: Schneidkante
- 19: Schneidebene
- 20: Drehachse
- 21: Schneidradius
- 22: Ringsegment
- 23: Schneidscheibe
- 24: Abstand
- 25: Schneidwerk
- 26: Schrägförderer
- 27: Wendetrommel
- 28: Gutstromteiler
- 29: Einlaufbereich
- 30: Umfangskreis
- 31: Schlagradius
- 32: Gutleithilfe
- 33: Nut
- 34: Kante
- 35: Dicke
- 36: Dreschspalt
- 37: Abschlussleiste
- 38: Verstellbereich

## Patentansprüche

1. Selbstfahrender Mähdrescher (1), umfassend
- eine tangentiale Drescheinrichtung (2) sowie
- eine axiale Trenneinrichtung (3),
wobei die Drescheinrichtung (2) eine tangentiale Vortrommel (4), eine in Strömungsrichtung eines Erntegutstroms der Vortrommel (4) nachgeschaltete tangentiale Dreschtrommel (5) sowie einen sowohl die Vortrommel (4) als auch die Dreschtrommel (5) zumindest bereichsweise ummantelnden Dreschkorb (6) aufweist,
wobei die Trenneinrichtung (3) in Strömungsrichtung des Erntegutstroms betrachtet der Drescheinrichtung (2) unmittelbar nachgeschaltet ist und zwei axiale Trennrotoren (7, 8) umfasst, die um eine Drehachse (20) drehantreibbar gelagert sind,
wobei die Trenneinrichtung (3) an einem der Drescheinrichtung (2) zugewandten Ende einen Einlaufkopf (10) aufweist, in den Erntegut von der Drescheinrichtung (2) aus kommend übergebbar und geordnet den Trennrotoren (7, 8) zuleitbar ist,
wobei der Dreschkorb (6) relativ zu der Dreschtrommel (5) bewegbar ist, sodass ein zwischen der Dreschtrommel (5) und dem Dreschkorb (6) befindlicher Dreschspalt (36) veränderbar ist,
wobei
der Dreschkorb (6) unmittelbar dem Einlaufkopf (10) vorgeordnet und relativ zu diesem bewegbar ist,
wobei der Einlaufkopf (10) an einem der Drescheinrichtung (2) zugewandten Ende einen mittigen Gutstromteiler (28) aufweist, der in Form einer vertikal orientierten Trennwand ausgebildet und dazu geeignet ist, von der Drescheinrichtung (2) an den Einlaufkopf (10) übergebenes Erntegut auf die beiden Trennrotoren (7, 8) aufzuteilen,
**dadurch gekennzeichnet, dass**
der Dreschkorb (6) eine Gutleithilfe (32) umfasst, die dem Gutstromteiler (28) zugeordnet ist und diesen zumindest bereichsweise umgreift,
wobei die Gutleithilfe (32) im Zuge einer Bewegung des Dreschkorbs (6) relativ zu dem Einlaufkopf (10) entlang des Gutstromteilers (28) führbar ist.

2. Mähdrescher (1) nach Anspruch 1, **dadurch gekennzeichnet, dass** die Gutleithilfe (32) in eine von dem Gutstromteiler (28) weg gerichtete Richtung spitz zu einer Kante (34) hin zulaufend ausgebildet ist.

3. Mähdrescher (1) nach einem der vorhergehenden Ansprüche, **dadurch gekennzeichnet, dass** die Gutleithilfe (32) an einer von dem übrigen Dreschkorb (6) abgewandten Seite eine Nut (33) umfasst, in der der Gutstromteiler (28) geführt ist.

4. Mähdrescher (1) nach einem der vorhergehenden Ansprüche, **dadurch gekennzeichnet, dass** der Dreschkorb (6) am Übergang zu dem Einlaufkopf (10) eine Abschlussleiste (37) aufweist, wobei vorzugsweise die Gutleithilfe (32) in die Abschlussleiste (37) eingesetzt ist.

5. Mähdrescher (1) nach einem der vorhergehenden Ansprüche, **dadurch gekennzeichnet, dass** der Gutstromteiler (28) zumindest in einem Verstellbereich (38), in dem die Gutleithilfe (32) im Zuge einer Verstellung des Dreschkorbs (6) entlang des Gutstromteilers (28) führbar ist, eine zumindest im Wesentlichen konstante Dicke (35) aufweist.

6. Mähdrescher (1) nach einem der vorhergehenden Ansprüche, **dadurch gekennzeichnet, dass** zumindest ein Korbsegment (9) des Dreschkorbs (6) bündig einem der Drescheinrichtung (2) zugewandten Ende des Einlaufkopfs (10) vorgeordnet ist.

7. Mähdrescher (1) nach einem der vorhergehenden Ansprüche, **dadurch gekennzeichnet, dass** die Dreschtrommel (5) einen zylindrischen, um seine Mittelachse (11) drehantreibbaren Trommelkörper (12) umfasst, wobei die Dreschtrommel (5) einen in Längsrichtung des Trommelkörpers (12) betrachtet mittig an einer äußeren Mantelfläche (14) des Trommelkörpers (12) angeordneten Schneidring (17) umfasst, der in Umfangsrichtung des Trommelkörpers (12) umläuft, wobei der Schneidring (17) mindestens eine radial äußere, in Umfangsrichtung des Trommelkörpers (12) umlaufende Schneidkante (18) aufweist, wobei die Schneidkante (18) in einer senkrecht zu der Mittelachse (11) des Trommelkörpers (12) angeordneten Schneidebene (19) angeordnet ist und einen Umfangskreis (30) beschreibt.

8. Mähdrescher (1) nach Anspruch 7, **dadurch gekennzeichnet, dass**, die Dreschtrommel (5) eine Vielzahl von Schlagleisten (13) umfasst, die an der äußeren Mantelfläche (14) des Trommelkörpers (12) angeordnet sind, wobei die Schlagleisten (13) jeweils eine langgestreckte Schlagkante (15) aufweisen, die parallel zu der Mittelachse (11) des Trommelkörpers (12) orientiert ist, wobei die Schlagleisten (13) jeweils in radiale Richtung bezogen auf die Mittelachse (11) des Trommelkörpers (12) in eine von der Mittelachse (11) weg gerichtete Richtung über die äußere Mantelfläche (14) des Trommelkörpers (12) vorstehen und an der radial außen liegenden Schlagkante (15) einen Umfangskreis (16) um die Mittelachse (11) beschreiben, auf dem die jeweilige Schlagkante (15) bei bestimmungsgemäßem Betrieb der Dreschtrommel (5) in einem Schlagradius (31) um die Mittelachse (11) umläuft.

9. Mähdrescher (1) nach den Ansprüche 7 und 8, **dadurch gekennzeichnet, dass** ein auf die Mittelachse (11) der Dreschtrommel (5) bezogener Schneidradius (21) des Schneidrings (17) größer ist als die Schlagradien (31) der Schlagkanten (15) der Schlagleisten (13).

10. Mähdrescher (1) nach einem der vorhergehenden Ansprüche, **dadurch gekennzeichnet, dass** die Dreschtrommel (5) unmittelbar der Trenneinrichtung (3) vorgeschaltet ist, sodass Erntegut unmittelbar von der Dreschtrommel (5) an den Einlaufkopf (10) übergebbar ist.

## Claims

1. A self-propelled combine harvester (1), comprising
- a tangential threshing device (2), as well as
- an axial separating device (3),
wherein the threshing device (2) has a tangential front drum (4), a tangential threshing drum (5) downstream of the front drum (4) in the direction of flow of a flow of harvested material, as well as a threshing concave (6) covering both the front drum (4) and also the threshing drum (5) at least in regions,
wherein, considered in the direction of flow of the flow of harvested material, the separating device (3) is immediately downstream of the threshing device (2) and comprises two axial separating rotors (7, 8) which are mounted for driving in rotation about an axis of rotation (20),
wherein, at an end facing the threshing device (2), the separating device (3) has an inflow head (10) into which harvested material coming out of the threshing device (2) can be transferred and can be fed to the separating rotors (7, 8) in an ordered manner,
wherein the threshing concave (6) is movable relative to the threshing drum (5), so that a threshing gap (36) located between the threshing drum (5) and the threshing concave (6) can be varied,
wherein the threshing concave (6) is disposed directly in front of the inflow head (10) and is movable relative thereto,
wherein, at an end facing the threshing device (2), the inflow head (10) has a central material flow divider (28) which is constructed in the form of a vertically orientated partitioning wall and is suitable for dividing harvested material transferred from the threshing device (2) to the inflow head (10) onto the two separating rotors (7, 8),
**characterized in that**
the threshing concave (6) comprises a material directing aid (32) which is associated with the material flow divider (28) and encompasses it at least in regions,
wherein, during the course of a movement of the threshing concave (6) relative to the inflow head (10), the material directing aid (32) can be guided along the material flow divider (28).

2. The combine harvester (1) according to claim 1, **characterized in that** the material directing aid (32) tapers to an edge (34) in a direction away from the material flow divider (28).

3. The combine harvester (1) according to one of the preceding claims, **characterized in that**, at a side facing away from the rest of the threshing concave (6), the material directing aid (32) comprises a groove (33) in which the material flow divider (28) is guided.

4. The combine harvester (1) according to one of the preceding claims, **characterized in that**, at the transition to the inflow head (10), the threshing concave (6) has an end bar (37), wherein preferably, the material directing aid (32) is inserted into the end bar (37).

5. The combine harvester (1) according to one of the preceding claims, **characterized in that**, at least in an adjustment region (38) in which the material directing aid (32) can be guided along the material flow divider (28) during the course of an adjustment of the threshing concave (6), the material flow divider (28) has an at least substantially constant thickness (35).

6. The combine harvester (1) according to one of the preceding claims, **characterized in that** at least one concave segment (9) of the threshing concave (6) is disposed level with an end of the inflow head (10) facing the threshing device (2).

7. The combine harvester (1) according to one of the preceding claims, **characterized in that** the threshing drum (5) comprises a cylindrical drum body (12) which can be driven in rotation about its central axis (11) wherein, considered in the longitudinal direction of the drum body (12), the threshing drum (5) comprises a cutting ring (17) disposed centrally on an outer curved surface (14) of the drum body (12) and which turns in the circumferential direction of the drum body (12), wherein the cutting ring (17) has at least one radially outer cutting edge (18) which runs in the circumferential direction of the drum body (12), wherein the cutting edge (18) is disposed in a cutting plane (19) disposed perpendicular to the central axis (11) of the drum body (12) and describes a circumferential circle (30).

8. The combine harvester (1) according to claim 7, **characterized in that** the threshing drum (5) comprises a plurality of beater bars (13) which are disposed on the outer curved surface (14) of the drum body (12), wherein the beater bars (13) respectively have an elongated beater edge (15) which is orientated parallel to the central axis (11) of the drum body (12), wherein, respectively in the radial direction with respect to the central axis (11) of the drum body (12), the beater bars (13) protrude beyond the outer curved surface (14) of the drum body (12) in a direction away from the central axis (11) and, at the radially external beater edge (15), describe a circumferential circle (16) about the central axis (11) on which the respective beater edge (15) runs in a beater radius (31) about the central axis (11) during the intended operation of the threshing drum (5).

9. The combine harvester (1) according to claims 7 and 8, **characterized in that** a cutting radius (21) of the cutting ring (17) with respect to the central axis (11) of the threshing drum (5) is greater than the beater radii (31) of the beater edges (15) of the beater bars (13).

10. The combine harvester (1) according to one of the preceding claims, **characterized in that** the threshing drum (5) is directly upstream of the separating device (3), so that harvested material can be transferred directly from the threshing drum (5) to the inflow head (10).

## Revendications

1. Moissonneuse-batteuse (1) automotrice, comprenant
- un dispositif de battage (2) tangentiel, ainsi que
- un dispositif de séparation (3) axial,
dans laquelle le dispositif de battage (2) présente un premier tambour (4) tangentiel, un tambour batteur (5) tangentiel placé en aval du premier tambour (4) dans le sens d'écoulement d'un flux de récolte, ainsi qu'un contre-batteur (6) enveloppant au moins par portions aussi bien le premier tambour (4) que le tambour batteur (5),
dans laquelle le dispositif de séparation (3) est placé directement en aval du dispositif de battage (2), vu dans le sens d'écoulement du flux de récolte, et comporte deux rotors de séparation (7, 8) axiaux qui sont montés avec possibilité d'entraînement en rotation autour d'un axe de rotation (20),
dans laquelle le dispositif de séparation (3) présente, à une extrémité tournée vers le dispositif de battage (2), une tête d'entrée (10) dans laquelle la récolte provenant du dispositif de battage (2) peut être transférée pour être acheminée de manière ordonnée aux rotors de séparation (7, 8),
dans laquelle le contre-batteur (6) peut être déplacé par rapport au tambour batteur (5), de manière à pouvoir modifier un interstice de battage (36) situé entre le tambour batteur (5) et le contre-batteur (6),
dans laquelle le contre-batteur (6) est placé directement en amont de la tête d'entrée (10) et peut être déplacé par rapport à celle-ci,
dans laquelle la tête d'entrée (10) présente, à une extrémité tournée vers le dispositif de battage (2), un diviseur de flux de produit (28) central qui est réalisé sous la forme d'une paroi de séparation à orientation verticale et est adapté pour répartir sur les deux rotors de séparation (7, 8) le produit récolté transféré du dispositif de battage (2) à la tête d'entrée (10),
**caractérisée en ce que**
le contre-batteur (6) comprend une aide de guidage du produit (32) qui est associée au diviseur de flux de produit (28) et entoure celui-ci au moins par portions,
l'aide de guidage du produit (32) pouvant être guidée le long du diviseur de flux de produit (28), dans le cadre d'un mouvement du contre-batteur (6) par rapport à la tête d'entrée (10).

2. Moissonneuse-batteuse (1) selon la revendication 1, **caractérisée en ce que** l'aide de guidage du produit (32) est réalisée sous une forme s'effilant en direction d'une arête (34), dans une direction s'éloignant du diviseur de flux de produit (28).

3. Moissonneuse-batteuse (1) selon une des revendications précédentes, **caractérisée en ce que** l'aide de guidage du produit (32) comprend, sur un côté éloigné du reste du contre-batteur (6), une rainure (33) dans laquelle est guidé le diviseur de flux de produit (28).

4. Moissonneuse-batteuse (1) selon une des revendications précédentes, **caractérisée en ce que**, à l'endroit du passage vers la tête d'entrée (10), le contre-batteur (6) présente une baguette d'extrémité (37), l'aide de guidage du produit (32) étant de préférence insérée dans la baguette d'extrémité (37).

5. Moissonneuse-batteuse (1) selon une des revendications précédentes, **caractérisée en ce que** le diviseur de flux de produit (28) présente une épaisseur (35) au moins sensiblement constante, au moins dans une zone de réglage (38) dans laquelle l'aide de guidage du produit (32) peut être guidée le long du diviseur de flux de produit (28) dans le cadre d'un réglage du contre-batteur (6).

6. Moissonneuse-batteuse (1) selon une des revendications précédentes, **caractérisée en ce qu'**au moins un segment (9) du contre-batteur (6) est disposé de manière affleurante devant une extrémité de la tête d'entrée (10) tournée vers le dispositif de battage (2).

7. Moissonneuse-batteuse (1) selon une des revendications précédentes, **caractérisée en ce que** le tambour batteur (5) comprend un corps de tambour (12) cylindrique pouvant être entraîné en rotation autour de son axe central (11), le tambour batteur (5) comportant une bague de coupe (17) qui est disposée au milieu sur une surface enveloppe (14) extérieure du corps de tambour (12), vu dans la direction longitudinale du corps de tambour (12), et qui s'étend dans la direction périphérique du corps de tambour (12), la bague de coupe (17) présentant au moins une arête de coupe (18) radialement extérieure, s'étendant dans la direction périphérique du corps de tambour (12), l'arête de coupe (18) étant disposée dans un plan de coupe (19) placé perpendiculairement à l'axe central (11) du corps de tambour (12) et décrivant un cercle périphérique (30).

8. Moissonneuse-batteuse (1) selon la revendication 7, **caractérisée en ce que** le tambour batteur (5) comprend une pluralité de battes (13) qui sont disposées sur la surface enveloppe (14) extérieure du corps de tambour (12), les battes (13) présentant chacune une arête de battage (15) allongée qui est orientée parallèlement à l'axe central (11) du corps de tambour (12), les battes (13) dépassant par rapport à la surface enveloppe (14) extérieure du corps de tambour (12), respectivement dans la direction radiale par rapport à l'axe central (11) du corps de tambour (12), dans une direction orientée dans le sens opposé à l'axe central (11), et décrivant, sur l'arête de battage (15) située radialement à l'extérieur, un cercle périphérique (16) autour de l'axe central (11), sur lequel l'arête de battage (15) respective évolue dans un rayon de battage (31) autour de l'axe central (11), lors du fonctionnement conforme à l'utilisation prévue du tambour batteur (5).

9. Moissonneuse-batteuse (1) selon les revendications 7 et 8, **caractérisée en ce qu'**un rayon de coupe (21) de la bague de coupe (17), par rapport à l'axe central (11) du tambour batteur (5), est plus grand que les rayons de battage (31) des arêtes de battage (15) des battes (13).

10. Moissonneuse-batteuse (1) selon une des revendications précédentes, **caractérisée en ce que** le tambour batteur (5) est placé directement en amont du dispositif de séparation (3), de sorte que la récolte peut être transférée directement du tambour batteur (5) à la tête d'entrée (10).
